# EUROPEAN PATENT APPLICATION

(11) **EP 1 643 792 A1**
(43) Date of publication of application: **05.04.2006**
(21) Application number: 05255903.6
(22) Date of filing: 22.09.2005
(51) Int. Cl.: H04Q 7/38

(54) **Method for calculating a dynamic set of location areas for a mobile unit**

(30) Priority: 29.09.2004 US 953727
(71) Applicant: LUCENT TECHNOLOGIES INC., Murray Hill, New Jersey 07974-0636 (US)
(72) Inventor: Benco, David S., Windfield Illinois 60190 (US); Redell, Karen Lee, Naperville Illinois, 60565 (US)
(74) Representative: Sarup, David Alexander

(57) **Abstract**

The present invention provides a method for calculating a dynamic set of location areas for a mobile unit. An initial set of location areas is defined for the mobile unit. Movement patterns of the mobile unit are determined, and a revised set of location areas for the mobile unit are calculated based upon the initial set of location areas and the movement patterns for the mobile unit. The calculating can be done by measuring paging channel or access channel loads.

## Description

### FIELD OF THE INVENTION

The present invention relates generally to mobile communication systems, and more particularly to a method for paging a mobile unit in a mobile communication system.

### BACKGROUND OF THE INVENTION

In mobile or wireless communication systems, mobile units have the capability to roam within the wireless communication system. When the wireless communication system receives a call request for a mobile unit, the communication system has to locate the mobile unit in order to complete the call.

The "mobility" in mobile communication systems is enabled via two communication channels between a base station and a mobile unit. The two channels are the paging channel and the access channel. The paging channel is used to verify the location of the mobile unit within the network and to deliver incoming calls to the mobile unit. The access channel is used by the mobile unit for registration for such tasks as reporting power-up and reporting changes in location.

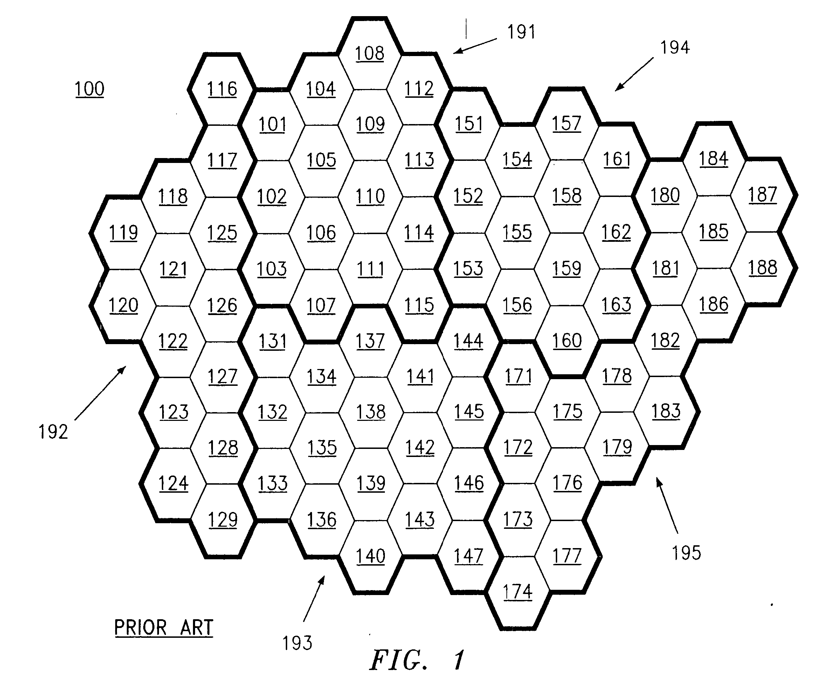

Historically, when an incoming call arrived for a mobile phone, all of the cells in the entire MSC were paged in order to contact the mobile unit and deliver the call. One method used to decrease the number of paging messages is to partition the MSC into several zones. FIG. 1 depicts a cellular grid 100 in accordance with the prior art. Cellular grid 100 depicts cells that are under the control of a Mobile Switching Center (MSC). Each of these zones includes a plurality of cells and is commonly referred to as a location areas (LA). LA 191 comprises cells 101 through 115, LA 192 comprises cells 116 through 129, LA 193 comprises cells 131 through 147, LA 194 comprises cells 151 through 163, and LA 195 comprises cells 171 through 188. In accordance with the prior art, the location areas are defined based upon geography and RF conditions. The location areas are therefore static. The MSC pages only those cells in the last known LA of the mobile unit. This reduces the load on the paging channel.

One problem with this method is that the load on the access channel is increased because registration messages are sent by a mobile unit every time an LA boundary is crossed. Increasing the number of LAs reduces the size of each LA and the load on the paging channel, but at the expense of increasing the load on the access channel.

Utilizing the prior art method involves a trade-off between larger location areas, which increase the load on the paging channel but reduce the load on the access channel, and smaller location areas, which increase the demand on the access channel but reduce the paging channel usage. There is currently no mechanism for determining the optimal location area size.

Therefore, a need exists for a method for efficiently paging a mobile unit that allows for a decreased paging area but that does not consume too many system resources.

### BRIEF SUMMARY OF THE INVENTION

The present invention provides a method for calculating a dynamic set of location areas for a mobile unit. The MSC defines an initial set of location areas, preferably based upon the geography of the cells and RF conditions. The MSC also determines movement patterns for mobile units by collecting data pertaining to mobile unit movement, such as registration messages, handoffs, etc. This data establishes a location probability footprint for a given mobile unit, which is the probability of the mobile unit being located at a given cell.

The location probability footprints are then combined, and the combination results in a location probability map which shows for each cell the probability of a mobile unit being located there. In an exemplary embodiment, the location probability map is a topographical map. A cluster analysis then yields a maximal set of new location areas by identifying each group of high-probability location cells bordered by lower-probability location cells. A larger number of clusters results in a smaller cluster size, which in turn results in paging channel occupancy reduction because the size of the location area that is paged is small. Since the location area boundaries are defined along the lower-probability location cells, the number of registration messages is necessarily reduced, which in turn reduces the occupancy of the access channel.

The MSC therefore calculates a revised set of location areas using a cluster analysis of the movement patterns of mobile units to produce an optimized set of location area boundaries. In this manner, the location areas can be significantly varying of the location area relative sizes, while not adversely affecting the paging and access channel load.

### BRIEF DESCRIPTION OF THE SEVERAL VIEWS OF THE DRAWINGS

FIG. 1 depicts a cellular grid of a communication system in accordance with the prior art.
FIG. 2 depicts a cellular grid of a communication system in accordance with an exemplary embodiment of the present invention.
FIG. 3 depicts a flowchart of a method for calculating a dynamic set of location areas for a mobile unit in accordance with an exemplary embodiment of the present invention.

### DETAILED DESCRIPTION OF THE INVENTION

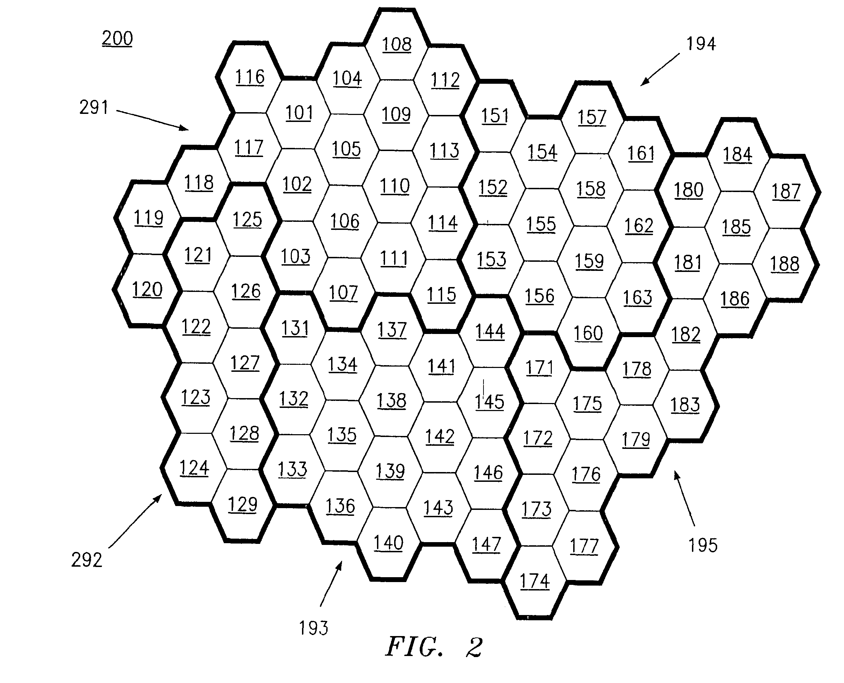

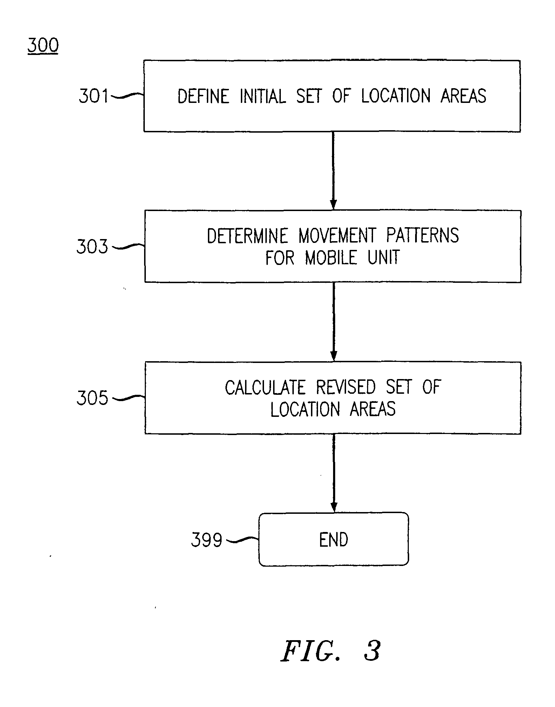

The present invention can be better understood with reference to FIGs. 2 and 3. FIG. 2 depicts a cellular grid 200 of a wireless communication system in accordance with an exemplary embodiment of the present invention. The wireless communication system includes a Mobile Switching Center (MSC) (not pictured) and a plurality of base stations. In the exemplary embodiment depicted in FIG. 2, the MSC controls all base stations and all cells depicted. Each base station transmits and receives signals within a coverage area depicted by cells 101-129, 131-147, 151-163, and 171-188. The MSC performs call processing, resource management, and other functions for the wireless communication system, and controls and communicates with the base stations.

Base stations communicate with mobile units located within their cells. As depicted in FIG. 2, LA 291 includes cells 101-120, and LS 292 includes cells 121-129. Looking at FIG. 1, LA 191 includes cells 101-115, and LA 192 includes cells 116-129. LA 191 and LA 192 are chosen based upon geography and RF conditions. As can be seen in FIG. 2, LA 291 includes cells 101-120, and LA 292 includes cells 121-129. Cells 116-120 have been added to LA 191 to form LA 291. The addition of these cells to LA 291 is based on the clustering of mobile subscriber movement patterns.

FIG. 3 depicts a flowchart 300 of a method for calculating a dynamic set of location areas for a mobile unit in accordance with an exemplary embodiment of the present invention.

The MSC defines (301) an initial set of location areas. In an exemplary embodiment, the initial set of location areas is defined based upon the geography of the cells and RF conditions.

The MSC determines (303) movement patterns for mobile units by collecting data pertaining to mobile unit movement, such as registration messages, handoffs, etc. This data establishes a location probability footprint for a given mobile unit. The location probability footprint is the probability of the mobile unit being located at a given cell. The location probability footprints are then combined, and the combination results in a location probability map which shows for each cell the probability of a mobile unit being located there. In an exemplary embodiment, the location probability map is a topographical map.

The MSC calculates (305) a revised set of location areas. In an exemplary embodiment, the revised set of location areas is calculated using a cluster analysis of the movement patterns of mobile units to produce an optimized set of location area boundaries. In this manner, the location areas can be significantly varying of the location area relative sizes, while not adversely affecting the paging and access channel load.

A cluster analysis therefore yields a maximal set of clusters, which will become the new location areas, by identifying each group of high-probability location cells bordered by lower-probability location cells. A larger number of clusters results in a smaller cluster size, which in turn results in paging channel occupancy reduction because the size of the location area that is paged is small. Since the location area boundaries are defined along the lower-probability location cells, the number of registration messages is necessarily reduced, which in turn reduces the occupancy of the access channel.

While this invention has been described in terms of certain examples thereof, it is not intended that it be limited to the above description, but rather only to the extent set forth in the claims that follow.

## Claims

1. A method for calculating a dynamic set of location areas for a mobile unit comprising:
defining an initial set of location areas for a mobile unit;
determining movement patterns for the mobile unit; and
calculating a revised set of location areas for the mobile unit based upon the initial set of location areas and the movement patterns for the mobile unit.

2. A method for calculating a dynamic set of location areas for a mobile unit in accordance with claim 1, wherein the step of defining an initial set of location areas comprises defining an initial set of location areas based upon geography.

3. A method for calculating a dynamic set of location areas for a mobile unit in accordance with claim 1, wherein the step of defining an initial set of location areas comprises defining an initial set of location areas based upon RF conditions.

4. A method for calculating a dynamic set of location areas for a mobile unit in accordance with claim 1, wherein the step of calculating a revised set of location areas for the mobile unit comprises calculating a revised set of location areas for the mobile unit utilizing a cluster analysis.

5. A method for calculating a dynamic set of location areas for a mobile unit in accordance with claim 1, wherein the step of calculating a revised set of location areas for the mobile unit comprises measuring paging channel loads.

6. A method for calculating a dynamic set of location areas for a mobile unit in accordance with claim 1, wherein the step of calculating a revised set of location areas for the mobile unit comprises measuring access channel loads.

7. A method for calculating a dynamic set of location areas for a mobile unit in accordance with claim 1, wherein the step of determining movement patterns for the mobile unit comprises collecting data pertaining to movement of the mobile unit.

8. A method for calculating a dynamic set of location areas for a mobile unit in accordance with claim 7, wherein the step of collecting data pertaining to movement of the mobile unit comprises collecting registration messages pertaining to movement of the mobile unit.

9. A method for calculating a dynamic set of location areas for a mobile unit in accordance with claim 7, wherein the step of collecting data pertaining to movement of the mobile unit comprises collecting handoff messages pertaining to movement of the mobile unit.

10. A method for calculating a dynamic set of location areas for a mobile unit in accordance with claim 1, wherein the step of calculating a revised set of location areas for the mobile unit comprises identifying a plurality of high-probability location cells that are adjacent to a plurality of lower-probability location cells.
